# EUROPEAN PATENT SPECIFICATION

(11) **EP 2 143 195 B1**
(45) Date of publication and mention of the grant of the patent: **06.01.2016**
(21) Application number: 08736127.5
(22) Date of filing: 11.04.2008
(51) Int. Cl.: H02M 3/158

(54) **DYNAMIC GATE DRIVE VOLTAGE ADJUSTMENT**
DYNAMISCHE GATEANSTEUERSPANNUNGS-EINSTELLUNG
AJUSTEMENT DE TENSION DYNAMIQUE D'ATTAQUE DE GRILLE

(30) Priority: 17.04.2007 DE 102007018028
(43) Date of publication of application: 13.01.2010
(73) Proprietor: TEXAS INSTRUMENTS DEUTSCHLAND GMBH, 85356 Freising (DE)
(72) Inventor: GEHRKE, Dirk, 85354 Freising (DE)
(74) Representative: Holt, Michael
(86) International application number: PCT/EP2008/054415
(87) International publication number: WO 2008/125622

(56) References cited:
- WO-A-2006/053339
- US-A1- 2005 213 267
- US-A1- 2008 001 553

## Description

The present invention relates to a DC-DC buck converter with a high-side power FET, a low- side power FET and a gate driver circuit that applies pulse width modulated drive signals to the gates of the power FETs with an optimized efficiency. For high output current applications the power FETs are external to the driver which is implemented as an integrated CMOS circuit.

Conventional buck converters are operated at a fixed supply voltage, switching the power FETs at a given frequency. More advanced drivers allow operation over a range of supply voltages.

It is always a concern to improve the efficiency of power converters. It has now been found that substantial improvements can be achieved by adjusting the gate drive voltage of the power FETs in response to the converter's output current. For optimum efficiency, the gate drive voltage in a non-linear function of the output current. This is a surprising discovery because it is well known that the power dissipation of a FET driver is proportional to the gate drive voltage.

International Patent Application No. WO2006/053339 describes a buck DC-to-DC converter circuit comprising a power stage having an input port for receiving a DC input voltage and having an output port for providing a regulated DC output voltage. The power stage also includes a control FET transistor, an energy storage element (Lo) connected to the control FET output terminal and to the output port and a driven FET transistor (Q2) to the first terminal of the energy storage element. A driver circuit provides driver signals to the gates of the control and driven FETs and receives power from a power supply external to the converter circuit. A driver powering circuit is arranged to derive power from the first terminal of the energy storage element and provide it to driver circuit after an initial period of operation of the converter circuit.

United States Patent Application No. US 2005/213267 describes a plurality of thin-film capacitors are grouped in phases with a control circuit switching each phase between charging and discharging states to supply one or more loads with controlled power.

Specifically, the invention provides a DC-DC buck converter as set forth in the appended claims. In a practical implementation, the gate drive voltage is adjusted in very small steps which are determined by an application specific integrated circuit (ASIC), a micro-controller (µC), a digital signal processor (DSP), a field programmable gate array (FPGA) or any kind of controller. The controller may capture the input and output voltage and current information to calculate the input power and the output power. This information is used to determine the efficiency and to adjust the gate drive voltage to maintain the overall efficiency of the converter at its maximum value.

In another implementation just the output current and output voltage are used as inputs to determine an optimum gate drive voltage.

Further advantages and features of the invention will appear from the following detailed description with reference to the drawings. In the drawings:
Fig. 1 is a block diagram of a single phase in the inventive DC-DC buck converter; and
Fig. 2 is a plot of the efficiency versus output current in a 4-phase DC-DC buck converter for three different values of gate drive voltage.

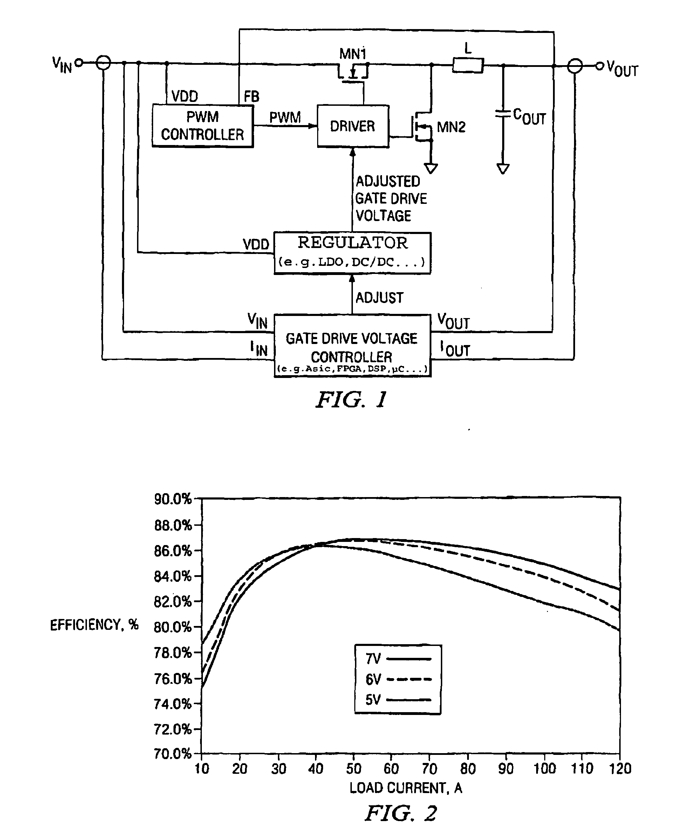

In Fig. 1, an n-channel power FET MN1 has its current path connected in series with an inductor L between an input voltage terminal Vin and an output voltage terminal Vout. The interconnection node between the transistor Mn1 and the inductor L is connected to the drain of another n-channel power FET MN2 which has its source connected to ground. A charge capacitor Cout is connected across the output terminal Vout and ground. The gates of power transistors MN1 and MN2 are driven by gate drive signals of mutually opposite phases from a gate driver. The gate driver in turn has an input from a pulse width modulation (PWM) controller which receives a supply voltage VDD from the input terminal Vin and a feedback signal FB from the output terminal Vout. So far, the DC-DC buck converter is conventional and will not be described in more detail. However, in a conventional converter the gate driver would use a fixed supply voltage for providing the gate drive signals at a constant voltage level. In the present invention, the gate driver receives an adjusted gate drive voltage from a voltage regulator. The voltage regulator can be a low dropout regulator, a dc-dc converter or any kind of linear voltage regulator.

The voltage regulator - whatever its implementation is - receives a supply input from terminal Vin at the level VDD and a control input "Adjust" from a gate drive voltage controller.

The gate drive voltage controller can be any type of controller: µC, DSP, ASIC etc. In the embodiment shown, inputs to the gate drive voltage controller are the output current lout, the output voltage Vout, the input voltage Vin and the input current lin. The current values can be measured simply by inserting a sense resistor in the current path. For the output current it is also possible to measure the voltage drop across the inductor. From this information (current and voltage values), the controller can compute the input power and the output power and, of course, the overall efficiency of the converter. The controller determines and provides the "Adjust" control signal to the voltage regulator in response to the output current lout so as to maximize the overall efficiency of the converter.

With reference to Fig. 2, it is seen that the efficiency for each of the three different gate drive voltage levels of 5V, 6V and 7V is a non-linear function of the output current. In the example which is given only for the purpose of explaining the principals of the invention and where the fixed input voltage Vin is 12V and the output voltage Vout is 1.3V, the highest efficiency for an output current up to 30A is achieved with a gate drive voltage of only 5V, from 30A to 53A best results are obtained with 6V and from 53A to 120A the highest efficiency is achieved with a gate driver voltage of 7V.

In practical implementations of the invention, the gate drive voltage controller adjusts the gate drive voltage in very fine steps so as to maximize the efficiency of the converter. The process of optimising the efficiency can be software controlled. The software would instruct the controller to calculate the overall efficiency and to tentatively adjust the gate drive voltage in a given sense by small steps as long as the calculated efficiency increases.

In the alternative and, especially, when the input voltage is assumed to be substantially constant, it will be sufficient for the gate drive voltage controller to use inputs from the output, i.e. the output voltage Vout and the output current lout, and the controller simply determines the optimum "Adjust" value from a look-up table. For applications with known input/output voltages the look-up table can be generated empirically. The solution with a look-up table needs only moderate performance on the side of the gate drive voltage controller.

In a general purpose implementation, the gate drive voltage controller may have a learn mode in which the look-up table is generated.

In a plural phase converter, e.g. a 4-phase buck converter, each phase would typically require a channel as shown in Fig. 1. Thus, the gate drive voltage would be individually adjusted in each channel. However, in an application where the load is well balanced between the channels, the gate drive voltage controller could be shared between all channels.

## Claims

1. A DC-DC buck converter comprising:
a high-side power FET (MN1) having a current path coupled in series between an input terminal (Vin) and an inductor (L), the inductor (L) being connected to an output terminal (Vout) for supplying an output current to a load;
a low-side power FET (MN2) having a current path coupled between a reference voltage terminal (VDD) and an interconnection node of the high-side power FET (MN1) with the inductor (L);
a pulse width modulation controller (PWM Controller) arranged to receive a feedback signal (FB) from the output terminal (Vout), and to provide pulse width modulated signals;
a gate driver circuit (DRIVER) arranged to receive the pulse width modulated signals from the pulse width modulation controller (PWM Controller) and, responsive thereto, to apply pulse width modulated drive signals to the gates of the high-side (MN1) and low-side (MN2) power FETs;
**characterised in that** it comprises
a gate drive voltage controller (GATE DRIVE VOLTAGE CONTROLLER) that is coupled to receive signals that are representative of an input voltage (Vin) at the input terminal, an output voltage (Vout) at the output terminal, an input current (Iin) at the input terminal, and the output current (lout), wherein the gate drive voltage controller (GATE DRIVE VOLTAGE CONTROLLER) is arranged to generate an adjustment signal (Adjust) in response to at least some of the signals that are representative of the input voltage, the output voltage, the input current, and the output current; and
a voltage regulator (REGULATOR) coupled to the gate drive voltage controller and to the gate driver circuit (DRIVER), the voltage regulator being arranged to receive the adjustment signal and to provide an adjusted gate drive voltage to the gate driver circuit (DRIVER) based on the adjustment signal.

2. The converter of claim 1, wherein the gate drive voltage controller computes input power and output power and supplies the adjustment signal (Adjust) to the voltage regulator so as to substantially minimize the difference between the input power and the output power.

3. The converter of claim 2, wherein the gate drive voltage controller is implemented by of the following:
a microcontroller (µC),
a digital signal processor (DSP),
an application specific integrated circuit (ASIC),
a field programmable gate array (FPGA).

4. The converter of claim 1, wherein the gate drive voltage controller uses a look-up table to determine the substantially optimum gate drive voltage.

5. The converter of claim 4, wherein the gate drive voltage controller is configured for operation in a learn mode to generate the look-up table.

## Patentansprüche

1. Ein DC-DC Abwärtswandler bestehend aus :
einem hochseitigen Leistungs-FET (MN1), der einen Stromweg gekoppelt in einer Reihe zwischen einem Eingangsanschluss (Vin) und einem Induktor (L) hat, welcher Induktor (L) verbundet mit einem Ausgangsanschluss (Vout) zur Lieferung von einem Ausgangsstrom an eine Last ist;
einem unterseiten Leistungs-FET (MN2), der einen Stromweg gekoppelt zwischen einem Referenzspannungsanschluss (VDD) und einem Verbindungsknoten des hochseitigen Leistungs-FETs (MN1) mit dem Induktor (L) hat;
einem Impulsbreitenmodulationsregler (PWM- Controller) konfiguriert zum Empfangen eines Rückkopplungssignals (FB) vom Ausgangsanschluss (Vout) und zum Liefern von pulsbreitenmodulierten Signalen;
einer Gate-Treiberschaltung (DRIVER) konfiguriert zum Empfangen der pulsbreitenmodulierten Signale vom Impulsbreitenmodulationsregler (PWM-Controller) und, in Reaktion darauf, zum Anwenden von pulsbreitenmodulierten Treibersignalen zu den Gates des hochseitigen Leistungs-FETs (MN1) und des unterseiten Leistungs-FETs (MN2);
gekennzeichnet indem es besteht aus:
einem Gate-Treibspannungsregler (GATE DRIVE VOLTAGE CONTROLLER) der gekoppelt ist, um Signale zu empfangen, die repräsentativ einer Eingangsspannung (Vin) beim Eingangsanschluss, einer Ausgangsspannung (Vout) beim Ausgangsanschluss, eines Eingangsstroms (Iin) beim Eingangsanschluss, und des Ausgangsstroms (Iout) sind, wobei der Gate-Treibspannungsregler (GATE DRIVE VOLTAGE CONTROLLER) konfiguriert ist, ein Regulierungssignal (Adjust) in Reaktion auf mindestens einige der Signale zu erzeugen, welche Signal repräsentativ von der Eingangsspannung, der Ausgangsspannung, dem Eingangsstrom, und dem Ausgangsstrom sind; und
einem Spannungsregler (REGULATOR) gekoppelt zum Gate-Treibspannungsregler und zur Gate-Treiberschaltung (DRIVER), der Spannungsregler seiend konfiguriert, um das Regulierungssignal zu empfangen, und zum Liefern einer regulierten Gate-Treibspannung zu der Gate-Treiberschaltung (DRIVER) jenach dem Regulierungssignal.

2. Der Wandler nach Anspruch 1, wobei der Gate-Treibspannungsregler die Eingangsleistung und die Ausgangsleistung rechnet, und liefert das Regulierungssignal (Adjust) zum Spannungsregler, damit der Unterschied zwischen der Eingangsleistung und der Ausgangsleistung im Wesentlichen minimiert wird.

3. Der Wandler nach Anspruch 2, wobei der Gate-Treibspannungsregler durch einen der folgenden eingeführt wird:
einen Mikroregler (µC),
einen digitalen Signalverarbeiter (DSP),
eine ASIC-Schlatung (ASIC),
ein Feld-programmierbares Gate-Array (FPGA).

4. Der Wandler nach Anspruch 1, wobei der Gate-Treibspannungsregler eine Nachschlagetabelle zum Bestimmen im Wesentlichen der optimalen Gate-Treibspannung anwendet.

5. Der Wandler nach Anspruch 4, wobei der Gate-Treibspannungsregler konfiguriert zum Betrieb in einem Lernmodus ist, um die Nachschlagetabelle zu erzeugen.

## Revendications

1. Un convertisseur abaisseur de tension CC comprenant :
un transistor FET côté haut (MN1) ayant un chemin d'accès de courant couplé en série entre une borne d'entrée (Vin) et un inducteur (L), l'inducteur (L) étant lié à une borne de sortie (Vout) pour fournir un courant de sortie à un charge ;
un transistor FET côté bas (MN2) ayant un chemin d'accès de courant couplé entre une borne de tension de référence (VDD) et un noeud d'interconnexion du transistor FET côté haut (MN1) avec l'inducteur (L) ;
un contrôleur de la modulation de largeur d'impulsion (contrôleur PWM) configuré pour recevoir un signal de rétroaction (FB) de la borne de sortie (Vout) et pour fournir des signaux modulés de largeur d'impulsion ;
un circuit de commande de grille (DRIVER) configuré pour recevoir des signaux modulés de largeur d'impulsion du contrôleur PWM et, en réponse d'appliquer des signaux modulés de largeur d'impulsion aux grilles des transistor FET côté haut (MN1) et transistor FET côté bas (MN2) ;
**caractérisé en ce qu'**il comprend
un contrôleur de la tension de commande de grille (GATE DRIVE VOLTAGE CONTROLLER) qui est couplé pour recevoir des signaux qui sont représentatifs d'une tension d'entrée (Vin) à la borne d'entrée, d'une tension de sortie (Vout) à la borne de sortie, d'un courant d'entrée (Iin) à la borne d'entrée et du courant de sortie (Iout), où le contrôleur de la tension de commande de grille (GATE DRIVE VOLTAGE CONTROLLER) est configuré pour générer un signal de réglage (Adjust) en réponse à l'au moins quelques des signaux qui sont représentatifs de la tension d'entrée, de la tension de sortie, du courant d'entrée, et du courant de sortie ; et
un régulateur de tension (REGULATOR) couplé au contrôleur de la tension de commande de grille et au circuit de commande de grille (DRIVER), le régulateur de tension étant configuré pour recevoir le signal de réglage et de fournir une tension réglée de commande de grille au circuit de commande de grille (DRIVER) basée sur le signal de réglage.

2. Le convertisseur selon la revendication 1, où le contrôleur de commande de tension de grille calcule l'alimentation d'entrée et l'alimentation de sortie et fournit le signal de réglage (Adjust) au régulateur de tension pour minimiser essentiellement la différence entre l'alimentation d'entrée et l'alimentation de sortie.

3. Le convertisseur selon la revendication 2, où le contrôleur de commande de tension de grille est mis en oeuvre par soit:
un microcontrôleur (µC),
un processeur de signal numérique (DSP),
un circuit intégré spécifique (ASIC),
un réseau pré diffusé programmable (FGPA).

4. Le convertisseur selon la revendication 1, où le contrôleur de tension de commande de grille utilise une table de consultation pour déterminer la tension de commande de grille essentiellement optimale.

5. Le convertisseur selon la revendication 4, où le contrôleur de tension de commande de grille est configuré pour fonctionner en mode d'apprentissage pour générer la table de consultation.
